## Europäisches Patentamt

## European Patent Office

## Office européen des brevets

(19)

(11) Publication number: **0 262 842**
A2

(12) # EUROPEAN PATENT APPLICATION

(21) Application number: **87308254.9**

(51) Int. Cl.⁴: **H04L 27/14**

(22) Date of filing: **17.09.87**

(30) Priority: **03.10.86 US 914887**

(43) Date of publication of application:
**06.04.88 Bulletin 88/14**

(84) Designated Contracting States:
**DE FR GB**

(71) Applicant: **HYCOM INCORPORATED**
**16841 Armstrong Avenue**
**Irvine California 92714(US)**

(72) Inventor: **Motley, David M.**
**18182 Romelle Avenue**
**Santa Ana California 92705(US)**
Inventor: **Stockman, John F.**
**265 Albert Place**
**Costa Mesa California 92627(US)**

(74) Representative: **Jackson, David Spence et al**
**REDDIE & GROSE 16, Theobalds Road**
**London, WC1X 8PL(GB)**

(54) **FSK Modem.**

(57) The number of multiplies per second required in a digital FSK modem receiver using a tracking phase lock loop demodulator (20) is greatly reduced by using an 800 Hz sampling rate band pass filter (16) to isolate the carrier and its sidebands, operating the phase lock loop demodulator (20) at the 800 Hz sample rate which is just sufficient to satisfy Nyquist's theory for the frequency band passed by the filter, and interpolating the detected data samples by using 7200 Hz sampling low pass filter (36) in the output.

Fig. 1.

EP 0 262 842 A2

## FSK MODEM

### Field of the Invention

This invention relates to 300 bps frequency shift keyed (FSK) modems, and more specifically to a scheme for operating portions of the receiver at a reduced sample rate which permits a practical microprocessor implementation of the modem.

### Background of the Invention

There is a constant need for new, low-speed frequency shift keyed data modems to be able to communicate with installed facilities as more new data nets are implemented. In the past these low-speed (typically 300 bits per second) modems were primarily constructed of analog filters and frequency discriminators. There is also a need for higher speed digital modems implemented with digital microprocessors to be able to fall back to these low-speed frequency shift keyed operations in order to be compatible with existing digital communication networks. Hence there is a need for these low-speed modem operations to be implemented with a digital microprocessor.

However, in order to be implemented with a digital microprocessor, it is desirable for a modem to use optimal digital implementation techniques that minimize the number of multiplications.

### Summary of the Invention

The present invention greatly reduces the number of multiplies in a digital FSK modem receiver without degrading performance by using the combination of a down sampled digital band pass filter for retrieving the frequency modulated carrier, a single complex multiply for demodulation and carrier phase lock loop at the down sample rate, and an up sampled digital low pass filter for interpolating the down sampled data signal to restore the up sample rate in the output signal.

It is therefore the object of the invention to reduce the number of multiplies per second required in a digital FSK modem receiver by operating the demodulation and carrier phase lock loop circuits at a sample rate substantially lower than the modem's nominal sample rate.

### Brief Description of the Drawings

Fig. 1 is an overall block diagram of a modem receiver incorporating the invention;

Fig. 2 is a block diagram of the band pass filter used in the invention; and

Fig. 3 is a block diagram of the low pass filter used in the invention.

### Description of the Preferred Embodiment

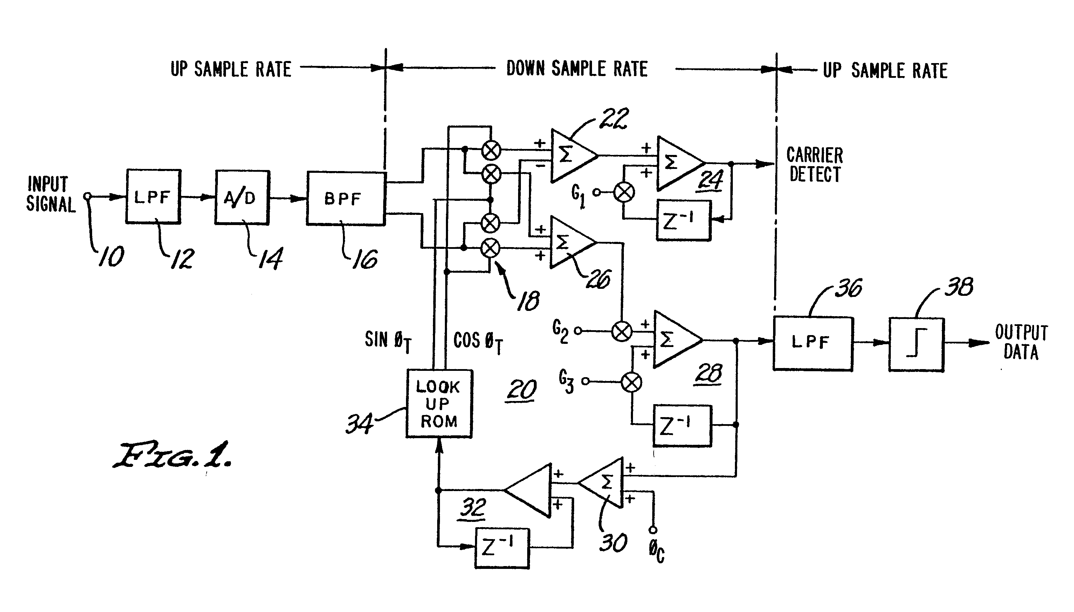

Fig. 1 shows the overall block diagram of the modem receiver used in this invention. The incoming signal 10 from the telephone line is first processed through an analog low pass filter 12 to remove any spurious components above one-half the sample frequency, and is then applied to an analog-to-digital converter 14. In the converter 14, the signal may be sampled at a 7200 Hz sample rate (hereafter referred to as the up sample rate).

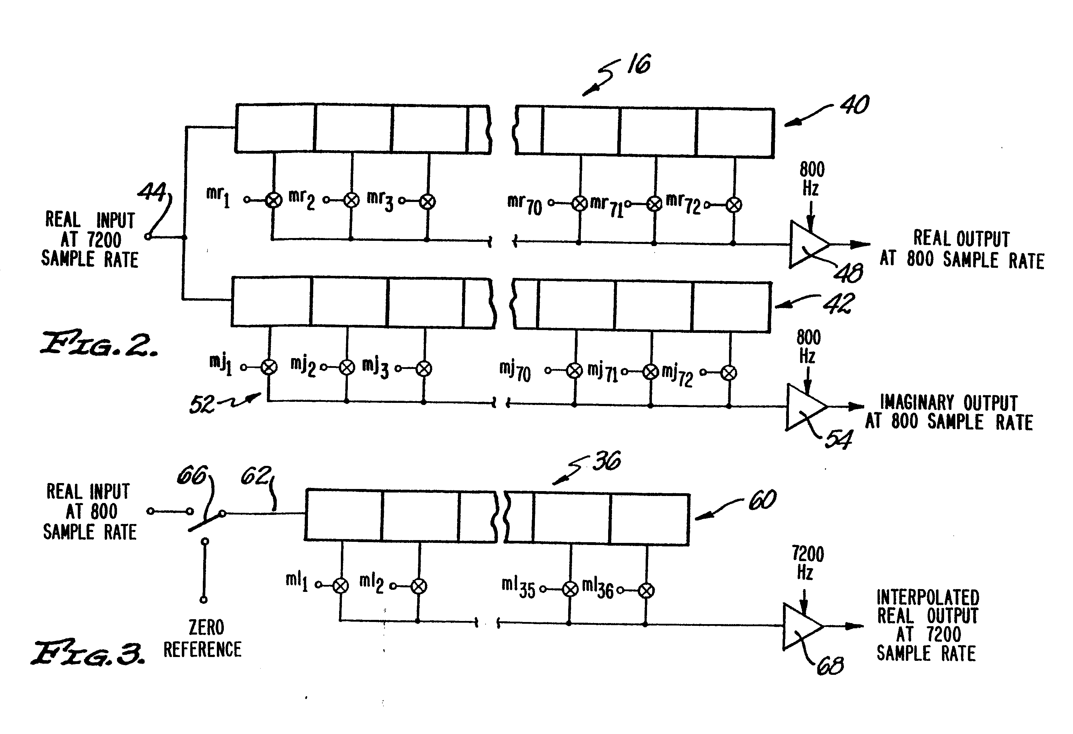

The digitized signal is next applied to a band pass filter 16 whose operation will be discussed in more detail in connection with Fig. 2. The filter 16 is a complex filter which extracts from the sampled signal the narrow frequency band which includes the carrier and its sidebands. The output of filter 16 is a complex function sampled, for example, at an 800 Hz sample rate (hereafter referred to as the down sample rate).

At the input to the tracking phase lock loop detector 20 used in this invention, the real and imaginary components of the output filter 16 are multiplied by $\sin \phi_T$ and $\cos \phi_T$ in the complex multiplier 18 at the down sample rate. The values of $\sin \phi_T$ and $\cos \phi_T$ are determined by the phaselock loop 20 in a conventional manner in accordance with the carrier frequency being received.

The subtractive combination of the multiplied real and imaginary components of the signal in adder 22 produces, for well-understood mathematical reasons, an output indicative of the presence of the carrier at the sample time. By integrating the carrier samples in a conventional integrator 24 in which $G_1$ is an appropriate gain coefficient, a carrier detect signal can be generated for use in validating the data output.

The additive combination of the multiplied real and imaginary signal components in adder 26 produces, again for well-understood mathematical reasons, an output indicative of whether the sideband frequency received at the sample time is above or below the carrier frequency. In the former instance, the output of integrator 28 is positive, in the latter it is negative. G$_2$ and G$_3$ are, again, appropriate gain coefficients which determine the shape of the phase lock loop frequency response.

The output of integrator 28 is additively combined in adder 30 with a constant $\phi_c$ representing the carrier frequency. The value of $\phi_c$ is determined by the formula

$$\phi_c = \{\frac{fc \ x \ 360}{fs}\} \ mod(360)$$

where f$_c$ is the carrier frequency and f$_s$ is the down-sample frequency. The dimension of $\phi_c$ is degrees of phase angle. For example, in the described embodiment, $\phi_c$ may be -123.75° for a carrier frequency of 2125 Hz (the mean frequency for a 2225 Hz data "1" and a 2025 Hz data "0"), and 166.5° for a carrier frequency of 1170 Hz (the mean frequency for a 1270 Hz data "1" and a 1070 Hz data "0".

The output of adder 30 is indicative of the data frequency being transmitted at the sample time, and when integrated by integrator 32, it can therefore be used to generate the appropriate values of sin $\phi_T$ and cos $\phi_T$ from the sin/cos ROM 34 to close the phase-lock loop 20.

The output of integrator 28, which represents data (for example positive for "1", negative for "0"), is applied at the down sample rate to low-pass filter 36 where it is interpolated to produce a signal output representing the data transmitted at the up sample rate. The functioning of filter 36 is discussed in detail hereafter in connection with Fig. 3. The output of filter 36 can finally be applied to a conventional signal detector 38 which produces output data usable by a computer.

Fig. 2 shows the details of band pass filter 16. The filter 16 is a complex filter with a pair of delay lines 40, 42 which, in the described embodiment, may have seventy-two taps each. A real sample input 44 from A/D converter 14 (Fig. 1) is applied to both delay lines at the 7200 Hz up sample rate. In line 40, the multiplicands or taps mr$_1$ through mr$_{72}$ are products of the sine of the carrier frequency and the up sampled tap values of an equivalent low-pass filter, whereas in line 42, the multiplicands mj$_1$ through mj$_{72}$ are products of the cosine of the carrier frequency and the up sampled tap values of an equivalent low-pass filter.

The products of the taps mr$_1$ through mr$_{72}$ and the corresponding contents of delay line 40 are summed in accumulator 48 once every ninth up sample time to produce the real component of the signal at an 800 Hz sample rate. Likewise, the product of the mj$_1$ through mj$_{72}$ taps and the cor-

responding contents of delay line 42 are summed once every ninth sample time in accumulator 54 to produce the imaginary component of the signal at an 800 Hz sample rate.

Fig. 3 shows the details of the low-pass filter 36. In the preferred embodiment, this filter may consist of a thirty-six tap delay line 60 whose multiplicands or taps ml$_1$ through ml$_{36}$ define the low-pass filter necessary to pass the data. The input 62 to the delay line 60 consists of the output of phase lock loop which only has samples at the 800 Hz down sample rate.

The low-pass filter 36, however, is operated at the up sample rate of 7200 Hz, which causes only every ninth input sample to be the output of integrator 28, all others being zero. The signal values (in this case four) in the delay line 60 are multiplied by the appropriate tap values ml$_1$ through ml$_{36}$ and summed in accumulator 68 at the 7200 Hz up sample rate before finally being detected by signal detector 38. The insertion of zeros into the delay line 60 is preferably accomplished by a switch 66 which is switched to the output of integrator 28 once every ninth 7200 Hz sample.

The interpolation effect resulting from the up-sampling performed by low pass filter 36 greatly increases the fidelity of the output. This is true because one form of performance reduction in asynchronous FSK operation is data jitter. Data jitter is that percentage of the smallest signalling element (i.e. here 1/300 second) by which the received symbol will deviate. Data jitter of 10 percent or less is desirable. However, if the smallest data symbol (1/300 seconds) is sampled by an 800 Hz sample frequency, there will be up to $(\frac{300}{800})$ = 37.5 percent jitter.

However, if the 1/300 second symbol is sampled by a 7200 Hz sample frequency, there is only 4.2 percent data jitter, which is acceptable. Therefore, although the modulated carrier can be processed at an 800 Hz sample frequency, the 300 bps signal must be sampled, for the reason stated above, at a 7200 Hz sample frequency. This is effectively achieved by the present invention.

The reason why the demodulation and detection in the circuit of the invention can be done at a down sample rate of only 800 Hz in the described embodiment is that the frequency spectrum of the FSK transmitter is contained within a bandwidth of less than 400 Hz and hence may be accurately represented (pursuant to Nyquist's theory) when sampled at a sample rate as low as 800 Hz.

Inasmuch as the multiplies in band pass filter 16 are performed only once in every nine up sample periods, and all but four of the multiplies in low pass filter 36 are zero in any given up sample period, the circuit of this invention needs to perform an average of only 8.22 complex multiplies and 4.33 real multiplies (a total of 20.78 multiplies) per up sample period, as compared to seventy-three complex multiplies and thirty-nine real multiplies (a total of 187 multiplies) per up sample period if the entire circuit were implemented at the up sample rate. This represents a nearly 90% reduction in the computing power required by the circuit and makes a microprocessor implementation of the circuit without performance reduction practical.

## Claims

1. A digital FSK modem, comprising:

(a) band pass filter means (16) for retrieving, from a digitized input signal, the frequency band containing the carrier and its sidebands, said band pass filter means (16) having a real input at an up sample rate, and a complex output at a lower down sample rate;

(b) demodulator detector means (20) connected to said band pass filter means (16) for demodulating the output of said band pass filter means (16) and deriving therefrom data signals representative of the logic level of data contained in said input signal, said demodulator/detector means (20) being operated at said down sample rate; and

(c) low pass filter means (36) connected to said demodulator/detector means (20) for interpolating said data signals, said low-pass filter means (36) having an input at said down sample rate and an output at said up sample rate.

2. A modem according to claim 1, characterised in that said demodulator/detector means (20) include a tracking phase lock loop.

3. A modem according to claim 1 or 2, characterised in that said demodulator/detector means further includes means (22,24) for deriving from said band pass filter output a carrier signal representative of the presence of the carrier.

4. A modem according to claim 2, characterised in that said tracking phase lock loop includes a complex multiplier (18) to produce said carrier and data signals.

UP SAMPLE RATE — DOWN SAMPLE RATE — UP SAMPLE RATE

INPUT SIGNAL

LPF 12
A/D 14
BPF 16

22
Σ
+
−
G₁ 24
Σ
+
+
Z⁻¹
CARRIER DETECT

18
SIN Øт    COS Øт

26
Σ
+
+

G₂
Σ
+
+
28
Z⁻¹

G₃

LPF 36
∫ 38
OUTPUT DATA

LOOK UP ROM 34
20

32
Z⁻¹
+
+

30
Σ
+
+
Øc

FIG.1.

0 262 842

FIG.2.

REAL INPUT AT 7200 SAMPLE RATE

$mr_1$ $mr_2$ $mr_3$ ... $mr_{70}$ $mr_{71}$ $mr_{72}$

800 Hz

REAL OUTPUT AT 800 SAMPLE RATE

$mj_1$ $mj_2$ $mj_3$ ... $mj_{70}$ $mj_{71}$ $mj_{72}$

800 Hz

IMAGINARY OUTPUT AT 800 SAMPLE RATE

FIG.3.

REAL INPUT AT 800 SAMPLE RATE

ZERO REFERENCE

$ml_1$ $ml_2$ ... $ml_{35}$ $ml_{36}$

7200 Hz

INTERPOLATED REAL OUTPUT AT 7200 SAMPLE RATE

0 262 842